# EUROPEAN PATENT APPLICATION

(11) **EP 4 808 243 A1**
(43) Date of publication of application: **16.09.2026**
(21) Application number: 24887763.1
(22) Date of filing: 24.10.2024
(51) Int. Cl.: H04W 72/1273

(54) **METHOD FOR DETERMINING SIZE OF PHYSICAL RESOURCE GROUP, AND APPARATUS**

(30) Priority: 08.11.2023 CN 202311483144
(71) Applicant: Datang Mobile Communications Equipment Co., Ltd., Beijing 100085 (CN)
(72) Inventor: SI, Qianqian, Beijing 100085 (CN); ZHAO, Yue, Beijing 100085 (CN); XING, Yanping, Beijing 100085 (CN); GAO, Xuejuan, Beijing 100085 (CN)
(74) Representative: Maiwald GmbH
(86) International application number: PCT/CN2024/126998
(87) International publication number: WO 2025/098150

(57) **Abstract**

This disclosure provides a method for determining size of physical resource group, and apparatus, and relates to the field of communication technology. The method includes: when dynamic physical resource group (PRG) is configured, determining, by a terminal, a size of a PRG based on a physical downlink shared channel (PDSCH) transmission parameter; wherein the PDSCH transmission parameter includes at least one of the following: a number of scheduled PDSCH symbols; or a number of scheduled PDSCH RBs of downlink subband.

## Description

### CROSS-REFERENCE TO RELATED APPLICATION

This application claims priority to Chinese Patent Application No. 202311483144.2, filed on November 8, 2023, entitled "method for determining size of physical resource group, and apparatus", disclosure of which is incorporated herein by reference in its entirety.

### TECHNICAL FIELD

This disclosure relates to the field of communication technology, and in particular to a method for determining size of physical resource group, and apparatus.

### BACKGROUND

With technological advancements, 5th Generation New Radio (5G NR) will support subband non-overlapping full-duplex, meaning that base stations can simultaneously transmit and receive by using different subbands within a single band/carrier/bandwidth part (BWP), with no overlap between the subband for transmission and the subband for reception. A subband non-overlapping full-duplex (SBFD) symbol is a symbol that simultaneously includes a subband for uplink transmission and a subband for downlink transmission.

As a result, how to determine the PRG size based on the SBFD system when dynamic physical resource group (PRG) is configured becomes an urgent problem to be solved.

### SUMMARY

An objective of this disclosure is to provide a method for determining a size of a physical resource group (PRG), and an apparatus, so as to enable the determination of the PRG size based on an SBFD system.

To achieve the above objective, an embodiment of this disclosure provides a method for determining a size of a physical resource group, including:
when dynamic physical resource group (PRG) is configured, determining, by a terminal, the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

In some embodiments, the method further includes:
determining, by the terminal, the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

In some embodiments, the method further includes:
determining, by the terminal, the size of the PRG based on the number of scheduled PDSCH symbols in the PDSCH transmission parameter and the threshold value in the reference information.

In some embodiments, the method further includes:
determining, by the terminal, the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

In some embodiments, the method further includes:
determining, by the terminal, a first comparison result and/or a second comparison result based on the number of scheduled PDSCH RBs of downlink subband in the PDSCH transmission parameter and the threshold value in the reference information;
determining, by the terminal, the size of the PRG based on the second correspondence, and the first comparison result and/or the second comparison result.

In some embodiments, the determining, by the terminal, the first comparison result and/or the second comparison result based on the number of scheduled PDSCH RBs of downlink subband in the PDSCH transmission parameter and the threshold value in the reference information includes:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

In some embodiments, the threshold value is determined by a number of symbols per slot.

In some embodiments, the threshold value is determined by a downlink subband size; or,
the threshold value is determined by a bandwidth of a bandwidth part (BWP) where a PDSCH is located, an uplink subband size, and a guard interval size.

In some embodiments, the downlink subband size is a size of a downlink subband where a PDSCH is located; or
the downlink subband size is a size of a downlink subband with the largest or smallest number of RBs among two downlink subbands.

In some embodiments, the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

In some embodiments, the reference information is configured through radio resource control (RRC) signaling.

To achieve the above objective, an embodiment of this disclosure further provides an apparatus for determining a size of a physical resource group, including: a memory, a transceiver, and a processor;
wherein the memory is used for storing program instructions; the transceiver is used for sending and receiving data under the control of the processor; the processor is used for reading the program instructions from the memory and performing the following step:
when dynamic physical resource group (PRG) is configured, determining the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

In some embodiments, the processor is further used for performing the following step:
determining the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

In some embodiments, the processor is further used for performing the following step:
determining the size of the PRG based on the number of scheduled PDSCH symbols in the PDSCH transmission parameter and the threshold value in the reference information.

In some embodiments, the processor is further used for performing the following step:
determining the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

In some embodiments, the processor is further used for performing the following steps:
determining a first comparison result and/or a second comparison result based on the number of scheduled PDSCH RBs of downlink subband in the PDSCH transmission parameter and the threshold value in the reference information; and
determining the size of the PRG based on the second correspondence, and the first comparison result and/or the second comparison result.

In some embodiments, the processor is further used for performing the following step:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

In some embodiments, the threshold value is determined by a number of symbols per slot.

In some embodiments, the threshold value is determined by a downlink subband size; or,
the threshold value is determined by a bandwidth of a bandwidth part (BWP) where a PDSCH is located, an uplink subband size, and a guard interval size.

In some embodiments, the downlink subband size is a size of a downlink subband where a PDSCH is located; or
the downlink subband size is a size of a downlink subband with the largest or smallest number of RBs among two downlink subbands.

In some embodiments, the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

In some embodiments, the reference information is configured through radio resource control (RRC) signaling.

To achieve the above objective, an embodiment of this disclosure further provides a method for determining a size of a physical resource group, including:
when dynamic physical resource group (PRG) is configured, determining, by a network device, the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

In some embodiments, the method further includes:
determining, by the network device, the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

In some embodiments, the method further includes:
determining, by the network device, the size of the PRG based on the number of scheduled PDSCH symbols in the PDSCH transmission parameter and the threshold value in the reference information.

In some embodiments, the method further includes:
determining, by the network device, the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

In some embodiments, the method further includes:
determining, by the network device, a first comparison result and/or a second comparison result based on the number of scheduled PDSCH RBs of downlink subband in the PDSCH transmission parameter and the threshold value in the reference information; and
determining, by the network device, the size of the PRG based on the second correspondence, and the first comparison result and/or the second comparison result.

In some embodiments, the determining, by the network device, the first comparison result and/or the second comparison result based on the number of scheduled PDSCH RBs of downlink subband in the PDSCH transmission parameter and the threshold value in the reference information includes:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

To achieve the above objective, an embodiment of this disclosure further provides an apparatus for determining a size of a physical resource group, including: a memory, a transceiver, and a processor;
wherein the memory is used for storing program instructions; the transceiver is used for sending and receiving data under the control of the processor; the processor is used for reading the program instructions from the memory and performing the following step:
when dynamic physical resource group (PRG) is configured, determining the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

To achieve the above objective, an embodiment of this disclosure also provides an apparatus for determining a size of a physical resource group, including:
a first processing module, configured to, when dynamic physical resource group (PRG) is configured, determine the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

To achieve the above objective, an embodiment of this disclosure also provides an apparatus for determining a size of a physical resource group, including:
a second processing module, configured to, when dynamic physical resource group (PRG) is configured, determine the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

To achieve the above objective, an embodiment of this disclosure also provides a processor-readable storage medium storing program instructions for causing a processor to execute the method for determining the size of the physical resource group as described above.

The above-disclosed technical solution has at least the following beneficial effects.

In the above technical solution of this disclosure, in the case that dynamic PRG is configured, the PRG size can be determined according to the PDSCH transmission parameter (i.e., at least one of a number of scheduled PDSCH symbols or a number of scheduled PDSCH RBs of downlink subband), so as to realize the determination of PRG size in the SBFD slot or symbol and ensure the flexibility of dynamic PRG size determination.

### BRIEF DESCRIPTION OF THE DRAWINGS

Fig. 1 is a schematic flowchart of a method according to an embodiment of this disclosure;
Fig. 2 is a schematic diagram of the application of a method according to an embodiment of this disclosure;
Fig. 3 is another schematic diagram of the application of a method according to an embodiment of this disclosure;
Fig. 4 is yet another schematic diagram of the application of a method according to an embodiment of this disclosure;
Fig. 5 is a structural block diagram of an apparatus according to an embodiment of this disclosure;
Fig. 6 is another schematic flowchart of a method according to an embodiment of this disclosure;
Fig. 7 is another structural block diagram of an apparatus according to an embodiment of this disclosure;
Fig. 8 is a schematic modular diagram of an apparatus according to an embodiment of this disclosure;
Fig. 9 is another schematic modular diagram of an apparatus according to an embodiment of this disclosure.

### DETAILED DESCRIPTION

In embodiments of this disclosure, the term "and/or" describes the relationship between related objects, indicating that three relationships can exist. For example, A and/or B can represent three cases: A alone, A and B simultaneously, and B alone. The character "/" generally indicates that the preceding and following related objects have an "or" relationship.

In embodiments of this disclosure, the term "multiple" refers to two or more, and other quantifiers are similar.

The technical solution of the embodiments of this disclosure will be clearly and thoroughly described below with reference to the accompanying drawings. Obviously, the described embodiments are only some embodiments of this disclosure, and not all embodiments. Based on the embodiments of this disclosure, all other embodiments obtained by those of ordinary skill in the art without creative effort are within the scope of this disclosure.

To enable those skilled in the art to better understand the embodiments of this disclosure, the following description will be provided first.

### 1) Duplex mode

5G NR supports Time Division Duplexing (TDD) and Frequency Division Duplexing (FDD). TDD and FDD refer to two duplex communication modes in mobile communication technology. In TDD mode, transmission and reception occur at different times on the same frequency channel (carrier), and uplink and downlink transmission resources are distinguished by time. In FDD mode, transmission and reception occur simultaneously on different frequency channels, and uplink and downlink transmission resources are distinguished by frequency.

For subband full-duplex systems, subband configurations currently considered for support include the following two cases:
SBFD subband configuration #1 uses the {DUD} mode, that is, one SBFD slot contains one uplink subband at the center of the carrier bandwidth and two downlink subbands on both sides of the carrier bandwidth;
SBFD subband configuration #2 uses the {DU} mode, that is, one SBFD slot contains one uplink subband on one side of the carrier bandwidth and one downlink subband on the other side of the carrier bandwidth.

### 2) Dynamic determination of PRG size in NR

NR supports dynamically determining the PRG size. When the UE supports the ability to dynamically determine the PRG size, the base station can indicate whether to use bundleSizeSet1 or bundleSizeSet2 through 1 bit in downlink control information (DCI). The candidate values of bundleSizeSet1 and bundleSizeSet2 are as follows:
- bundleSizeSet1={n4, wideband, n2-wideband, n4-wideband}
- bundleSizeSet2={n4, wideband}
where n2 and n4 are preset values, and wideband is the number of resources occupied by the physical downlink shared channel (PDSCH) in the frequency domain.

If the physical resource block (PRB) bundling size indicator field in DCI indicates bundleSizeSet1, then
- If bundleSizeSet1 is configured as n4, then the PRG size is n4
- If bundleSizeSet1 is configured as wideband, then PRG size = wideband
- If bundleSizeSet1 is configured as n2-wideband, then

If the number of consecutive PRBs scheduled by the UE is greater than (BWP size)/2, then the PRG size = wideband; otherwise, the PRG size = n2
- If bundleSizeSet1 is configured as n4-wideband, then

If the number of consecutive PRBs scheduled by the UE is greater than (BWP size)/2, then the PRG size = wideband; otherwise, the PRG size = n4.

If the PRB bundling size indicator field in DCI indicates bundleSizeSet2, then
- If bundleSizeSet2 is configured as n4, then the PRG size is n4.
- If bundleSizeSet2 is configured as wideband, then the PRG size = wideband.

However, for the SBFD subband configuration of {DUD}, if PDSCH cannot be transmitted using two discontiguous downlink subbands, the base station can only schedule within one downlink subband. The bandwidth of one downlink subband may always be less than half of the BWP bandwidth, causing the continuous resource block (RB) of PDSCH to never be greater than half of the bandwidth of the downlink BWP. Therefore, when bundleSizeSet1 is configured as n2-wideband or n4-wideband, PRG size cannot be implicitly determined as wideband. If PDSCH transmission using two discontiguous subbands is supported, it is necessary to determine how to implicitly determine the PRG size when RB resources are allocated in two discontiguous parts.

Embodiments of this disclosure provide a PRG size determination method and apparatus. The method and apparatus are based on the same concept, and since the principles by which they solve the problem are similar, for the implementation of one of them, reference can be made to the other of them; repeated description will be omitted.

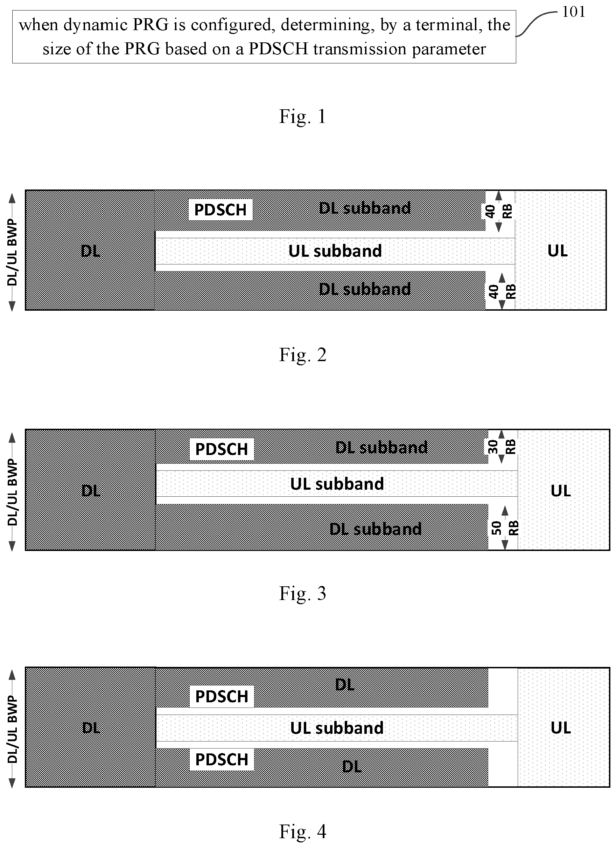

Fig. 1 shows a method for determining a size of a physical resource group according to an embodiment of this disclosure, including:
Step 101: when dynamic physical resource group (PRG) is configured, determining, by a terminal, the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

Thus, the method performed by a terminal for determining the physical resource group size in this embodiment of this disclosure, when dynamic PRG is configured, can determine the PRG size based on the PDSCH transmission parameter (i.e., at least one of a number of scheduled PDSCH symbols or a number of scheduled PDSCH RBs of downlink subband), thereby enabling the determination of the PRG size in the SBFD slot or symbol and ensuring the flexibility of dynamic PRG size determination.

In some embodiments, the method further includes:
determining, by the terminal, the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

Here, the reference information is information related to determining the PRG size. The first correspondence is actually the correspondence between a number of scheduled PDSCH symbols and the candidate value, and the second correspondence is actually the correspondence between the number of scheduled PDSCH RBs of downlink subband and the candidate value.

It should be noted that in this embodiment, the configuration that corresponds to the PRG and is indicated by DCI contains multiple candidate values, which can be implemented by indicating bundleSizeSet1 or bundleSizeSet2 through the PRB bundling size indicator field in the DCI.

In some embodiments, the method further includes:
determining, by the terminal, the size of the PRG based on the number of scheduled PDSCH symbols in the PDSCH transmission parameter and the threshold value in the reference information.

That is, the terminal can compare the number of scheduled PDSCH symbols with the corresponding threshold value, and determine the PRG size based on the comparison result.

In some embodiments, when the comparison result is that a number of scheduled PDSCH symbols is greater than the threshold value, the PRG size is determined to be the first candidate value in the configuration that corresponds to the PRG and is indicated by DCI; when the comparison result is that a number of scheduled PDSCH symbols is less than or equal to the threshold value, the PRG size is determined to be the second candidate value in the configuration that corresponds to the PRG and is indicated by DCI.

In other words, the terminal compares a number of scheduled PDSCH symbols with the threshold value. If the number of scheduled PDSCH symbols is greater than the threshold value, the PRG size is determined as the first candidate value. If the number of scheduled PDSCH symbols is less than or equal to the threshold value, the PRG size is determined as the second candidate value.

In some embodiments, the threshold value is determined by the number of symbols per slot. In this case, the threshold value is used for comparison with a number of scheduled PDSCH symbols. Specifically, the threshold value may be half the number of symbols per slot.

In some embodiments, the method further includes:
determining, by the terminal, the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

That is, based on a number of scheduled PDSCH symbols and the first correspondence, the terminal can determine the PRG size as the first candidate value when a number of scheduled PDSCH symbols is an odd number, and determine the PRG size as the second candidate value when a number of scheduled PDSCH symbols is an even number.

In some embodiments, the first candidate value is one of the candidate values of bundleSizeSet1 and bundleSizeSet2. For example, the first candidate value is wideband, and the second candidate value is n2 or n4; or, the first candidate value is n2 or n4, and the second candidate value is wideband. Of course, the first and second candidate values can also be preset specific values.

In some embodiments, the method further includes:
determining, by the terminal, a first comparison result and/or a second comparison result based on the number of scheduled PDSCH RBs of downlink subband in the PDSCH transmission parameter and the threshold value in the reference information;
determining, by the terminal, the size of the PRG based on the second correspondence, and the first comparison result and/or the second comparison result.

That is, based on the number of scheduled PDSCH RBs of downlink subband, the first comparison result and/or the second comparison result is determined for whether the PDSCH transmission is in one downlink subband or in two downlink subbands, and then the first comparison result and/or the second comparison result is used to determine the PRG size in combination with the second correspondence.

In some embodiments, the determining, by the terminal, the first comparison result and/or the second comparison result based on the number of scheduled PDSCH RBs of downlink subband in the PDSCH transmission parameter and the threshold value in the reference information includes:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In other words, when the PDSCH transmission occurs in one downlink subband, the terminal compares the number of scheduled PDSCH RBs in that downlink subband with the threshold value, and then determines the PRG size based on the comparison result. When the PDSCH transmission is in two downlink subbands, in one manner, the terminal compares the total number of scheduled PDSCH RBs in both downlink subbands with the threshold value, and then determines the PRG size based on the comparison result; or, the terminal compares the numbers of scheduled PDSCH RBs in the two downlink subbands with the threshold value, and then determines the PRG size based on the comparison results; or, the terminal compares the number of scheduled PDSCH RBs in the target downlink subband (the downlink subband with the smallest or largest number of scheduled PDSCH RBs) with the threshold value, and then determines the PRG size based on the comparison result.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

Thus, when PDSCH transmission occurs in one downlink subband, the terminal compares the number of scheduled PDSCH RBs in that downlink subband with the threshold value. If the first comparison result indicates that the number of scheduled PDSCH RBs is greater than the threshold value, the terminal determines the PRG size as the first candidate value; if the first comparison result indicates that the number of scheduled PDSCH RBs is less than or equal to the threshold value, the terminal determines the PRG size as the second candidate value.

When PDSCH transmission occurs in two downlink subbands, the terminal compares the total number of scheduled PDSCH RBs in these two downlink subbands with the threshold value. If the second comparison result indicates that the total number is greater than the threshold value, the terminal determines the PRG size as the first candidate value; if the second comparison result indicates that the total number is less than or equal to the threshold value, the terminal determines the PRG size as the second candidate value.

When PDSCH transmission occurs in two downlink subbands, the terminal compares the number of scheduled PDSCH RBs in each of the two downlink subbands with the threshold value. If the second comparison result indicates that the number of scheduled PDSCH RBs in one of the two downlink subbands is greater than the threshold value, then the PRG size in each downlink subband is determined to be the first candidate value; or if the second comparison result indicates that the numbers of scheduled PDSCH RBs in both downlink subbands are less than or equal to the threshold value, the PRG size in each downlink subband is determined to be the second candidate value; or if the second comparison result indicates that the numbers of scheduled PDSCH RBs in both downlink subbands are greater than the threshold value, the PRG size in each downlink subband is determined to be the first candidate value; or if the second comparison result indicates that the number of scheduled PDSCH RBs in one of the two downlink subbands is less than or equal to the threshold value, then the PRG size in each downlink subband is determined to be the second candidate value.

Here, following the above method, when PDSCH transmission occurs in two downlink subbands, the terminal can determine the same PRG size for the two downlink subbands.

When PDSCH transmission occurs in two downlink subbands, the terminal compares the number of scheduled PDSCH RBs in the target downlink subband with the threshold value. If the second comparison result indicates that the number of scheduled PDSCH RBs is greater than the threshold value, the terminal determines that the PRG size in each downlink subband is the first candidate value. If the second comparison result indicates that the number of scheduled PDSCH RBs is less than or equal to the threshold value, the terminal determines that the PRG size in each downlink subband is the second candidate value.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

That is, when PDSCH transmission is in two downlink subbands, the terminal determines the comparison result corresponding to each downlink subband, and determines the PRG size in a downlink subband as the first candidate value in the configuration that corresponds to the PRG and is indicated by DCI when the number of scheduled PDSCH RBs in the downlink subband is greater than the threshold value; and determines the PRG size in a downlink subband as the second candidate value in the configuration that corresponds to the PRG and is indicated by DCI when the number of scheduled PDSCH RBs in the downlink subband is less than or equal to the threshold value.

As a result, when PDSCH transmission is in two downlink subbands, the terminal can determine the PRG size for each of the two downlink subbands based on the comparison between the number of scheduled PDSCH RBs in each downlink subband and a threshold value. In this case, the PRG sizes in the two downlink subbands can be the same or different. For example, if the number of scheduled PDSCH RBs in downlink subband 1 and the number of scheduled PDSCH RBs in downlink subband 2 are both greater than the threshold value, then both the PRG sizes in these two downlink subbands are the first candidate value; if the number of scheduled PDSCH RBs in downlink subband 1 is greater than the threshold value, and the number of scheduled PDSCH RBs in downlink subband 2 is less than the threshold value, then the PRG size in downlink subband 1 is the first candidate value, and the PRG size in downlink subband 2 is the second candidate value.

In some embodiments, the threshold value is determined by a downlink subband size; or, the threshold value is determined by the bandwidth of the bandwidth part (BWP) where the PDSCH is located, an uplink subband size, and a guard interval size. In this case, the threshold value is used for comparison with the number of scheduled PDSCH RBs in the downlink subband. Specifically, the threshold value can be equal to half the downlink subband size (DL subband size); or, the threshold value can be equal to $\left({N}_{BWP , i}^{size}-{N}_{ULsb}^{size}-{N}_{GB}^{size}\right) / x$. Where, ${N}_{BWP , i}^{size}$ is the bandwidth of the BWP where the PDSCH is located, ${N}_{ULsb}^{size}$ is the uplink subband size, ${N}_{GB}^{size}$ is the guard interval size, and *x* is a preset value (e.g., 2 or 4).

When *x* = 2, the threshold value is applicable to a scenario in which, when PDSCH transmission is in two downlink subbands, the terminal determines the PRG size by comparing the total number of scheduled PDSCH RBs in the two downlink subbands with the threshold value; when *x* = 4, the threshold value is applicable to other scenarios.

In some embodiments, the downlink subband size is a size of a downlink subband where a PDSCH is located; or
the downlink subband size is a size of a downlink subband with the largest or smallest number of RBs among two downlink subbands.

That is, when the threshold value is determined by the DL subband size, the DL subband size can be the size of the downlink subband where the PDSCH is located; the DL subband size can also be the size of the downlink subband with the most RBs in the two downlink subbands, or the size of the downlink subband with the fewest RBs in the two downlink subbands.

In some embodiments, the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

In some embodiments, the reference information is configured through radio resource control (RRC) signaling.

That is, through receiving RRC messages, the terminal receives reference information configured by the network side. Of course, the reference information can also be predefined or pre-configured in the terminal, and the terminal can use it to determine the PRG size without receiving related messages.

The application of the methods in the embodiments of this disclosure is explained below with reference to specific scenarios.

Example 1: As shown in Fig. 2, assume the terminal is configured with dynamic PRG and the PRG bundleSizeSet indicated by DCI contains n2-wideband, the downlink (DL)/uplink (UL) BWP contains 100 RBs, where each downlink subband contains 40 RBs, the uplink subband contains 10 RBs, and the guard interval contains 10 RBs (each continuous guard interval contains 5 RBs). At this time, for the case that PDSCH transmission is in a single downlink subband, the terminal determines the PRG size by comparing the number of scheduled PDSCH RBs in that downlink subband with a threshold value.

Case 1: The threshold value is half the DL subband size, i.e., 40/2=20 RBs. The terminal is scheduled to perform PDSCH transmission in one downlink subband of the SBFD symbol. The PDSCH occupies 10 consecutive RBs in the frequency domain for transmission (i.e., the number of scheduled PDSCH RBs in this downlink subband is 10). Therefore, since the number of RBs is less than the threshold value (10<20), the terminal uses 2 as the PRG size.

Case 2: The threshold value is half the DL subband size, i.e., 40/2=20 RBs. The terminal is scheduled to perform PDSCH transmission in one downlink subband of the SBFD symbol. The PDSCH occupies 25 consecutive RBs in the frequency domain for transmission (i.e., the number of scheduled PDSCH RBs in this downlink subband is 25). Therefore, since the number of RBs is greater than the threshold value (25>20), the terminal uses the wideband as the PRG size.

Case 3: The threshold value is $\left({N}_{BWP , i}^{size}-{N}_{ULsb}^{size}-{N}_{GB}^{size}\right) / x = \left(100-10-10\right) / 4 = 20 RBs$ , and the rest is the same as Case 1 or Case 2.

Case 4: The threshold value is configured as 20 RBs through RRC signaling, and the rest is the same as Case 1 or Case 2.

Example 2: As shown in Fig. 3, assume the terminal is configured with dynamic PRG and the PRG bundleSizeSet indicated by DCI contains n2-wideband, the DL/UL BWP contains 100 RBs, wherein the downlink subband where the PDSCH is located contains 30 RBs, the other downlink subband contains 50 RBs, the uplink subband contains 10 RBs, and the guard interval contains 10 RBs (each continuous guard interval contains 5 RBs). At this time, for the case that PDSCH transmission is in a single downlink subband, the terminal determines the PRG size by comparing the number of scheduled PDSCH RBs in that downlink subband with a threshold value.
Case 1: The threshold value is half the downlink subband where PDSCH is located, i.e., 30/2 = 15 RBs. The terminal is scheduled to perform PDSCH transmission in one downlink subband of the SBFD symbol. The PDSCH occupies 10 consecutive RBs in the frequency domain for transmission (i.e., the number of scheduled PDSCH RBs in this downlink subband is 10). Therefore, since the number of RBs is less than the threshold value (10<15), the terminal uses 2 as the PRG size.
Case 2: The threshold value is half the downlink subband where PDSCH is located, i.e., 30/2 = 15 RBs. The terminal is scheduled to perform PDSCH transmission in one downlink subband of the SBFD symbol. The PDSCH occupies 30 consecutive RBs in the frequency domain for transmission (i.e., the number of scheduled PDSCH RBs in this downlink subband is 30). Therefore, since the number of RBs is greater than the threshold value (30>15), the terminal uses the wideband as the PRG size.
Case 3: The threshold value is configured as 20 RBs through RRC signaling, and the rest is the same as Case 1 or Case 2;
Case 4: The threshold value is half the size of the larger downlink subband, i.e., 50/2 = 25, and the rest is the same as Case 1 or Case 2.

Example 3: As shown in Fig. 4, assume the terminal is configured with dynamic PRG and the PRG bundle size set indicated by DCI contains n2-wideband, the DL/UL BWP contains 100 RBs, where each downlink subband contains 40 RBs, the uplink subband contains 10 RBs, and the guard interval contains 10 RBs (each continuous guard interval contains 5 RBs). At this time, for the case that the PDSCH transmission is in two downlink subbands, the terminal determines the PRG size by comparing the total number of scheduled PDSCH RBs in these two downlink subbands with a threshold value.

Case 1: The threshold value is $\left({N}_{BWP , i}^{size}-{N}_{ULsb}^{size}-{N}_{GB}^{size}\right) / x = \left(100-10-10\right) / 2 = 40 RBs$ . The terminal is scheduled to perform PDSCH transmission in two downlink subbands of the SBFD symbol. The PDSCH occupies a total of 10 RBs in the frequency domain in the two downlink subbands for transmission (that is, the total number of scheduled PDSCH RBs in these two downlink subbands is 10). Therefore, since the number of RBs is less than the threshold value (10<40), the terminal uses 2 as the PRG size.

Case 2: The threshold value is $\left({N}_{BWP , i}^{size}-{N}_{ULsb}^{size}-{N}_{GB}^{size}\right) / x = \left(100-10-10\right) / 2 = 40 RBs$ . The terminal is scheduled to perform PDSCH transmission in two downlink subbands of the SBFD symbol. The PDSCH occupies a total of 60 RBs in the frequency domain in the two downlink subbands for transmission (that is, the total number of scheduled PDSCH RBs in these two downlink subbands is 60). Therefore, since the number of RBs is greater than the threshold value (60>40), the terminal uses the wideband as the PRG size.

Example 4: the scenario is similar to Example 3; at this time, for the case that the PDSCH transmission is in two downlink subbands, the terminal determines the PRG size in each downlink subband by comparing the number of scheduled PDSCH RBs in each of the two downlink subbands with a threshold value.

Case 1: The threshold value is half the DL subband size, i.e., 40/2 = 20 RBs. The terminal is scheduled to perform PDSCH transmission in two downlink subbands of the SBFD symbol. The PDSCH occupies 10 RBs in a downlink subband A (i.e., the number of scheduled PDSCH RBs in downlink subband A is 10) and 25 RBs in the other downlink subband B (i.e., the number of scheduled PDSCH RBs in downlink subband B is 25). Since the number of RBs in downlink subband A is less than the threshold value (10 < 20), the terminal uses 2 as the PRG size in subband A. Since the number of RBs in downlink subband B is greater than the threshold value (25 > 20), the terminal uses the wideband as the PRG size in subband B.

Case 2: The threshold value is $\left({N}_{BWP , i}^{size}-{N}_{ULsb}^{size}-{N}_{GB}^{size}\right) / x = \left(100-10-10\right) / 4 = 20 RBs$ , and the rest is the same as Case 1.

Example 5: The scenario is similar to Example 3; at this time, for the case that the PDSCH transmission is in two downlink subbands, the terminal determines the PRG size in both downlink subbands by comparing the number of scheduled PDSCH RBs in each downlink subband with a threshold value.
Case 1: The threshold value is half the DL subband size, i.e., 40/2=20 RBs. The terminal is scheduled to perform PDSCH transmission in two downlink subbands of the SBFD symbol. The PDSCH occupies 10 RBs in a downlink subband A (i.e., the number of scheduled PDSCH RBs in downlink subband A is 10) and 25 RBs in the other downlink subband B (i.e., the number of scheduled PDSCH RBs in downlink subband B is 25). Since the number of RBs in downlink subband B is greater than the threshold value, that is, the number of scheduled PDSCH RBs in one of the two downlink subbands is greater than the threshold value, the terminal uses wideband as the PRG size in both downlink subbands.
Case 2: The threshold value is half the DL subband size, i.e., 40/2 = 20 RBs. The terminal is scheduled to perform PDSCH transmission in two downlink subbands of the SBFD symbol. The PDSCH occupies 10 RBs in a downlink subband A (i.e., the number of scheduled PDSCH RBs in downlink subband A is 10) and 15 RBs in the other downlink subband B (i.e., the number of scheduled PDSCH RBs in downlink subband B is 15). Since the numbers of RBs in both downlink subbands are less than the threshold value, that is, the number of scheduled PDSCH RBs in each downlink subband is less than the threshold value, the terminal uses 2 as the PRG size in both downlink subbands.
Case 3: The threshold value is $\left({N}_{BWP , i}^{size}-{N}_{ULsb}^{size}-{N}_{GB}^{size}\right) / x = \left(100-10-10\right) / 4 = 20 RBs$ , and the rest is the same as Case 1;
Case 4: The threshold value is $\left({N}_{BWP , i}^{size}-{N}_{ULsb}^{size}-{N}_{GB}^{size}\right) / x = \left(100-10-10\right) / 4 = 20 RBs$ , and the rest is the same as Case 2.

Example 6: The scenario is similar to Example 3; at this time, for the case that the PDSCH transmission is in two downlink subbands, the terminal determines the PRG size in both downlink subbands by comparing the number of scheduled PDSCH RBs in each downlink subband with a threshold value.
Case 1: The threshold value is half the DL subband size, i.e., 40/2 = 20 RBs. The terminal is scheduled to perform PDSCH transmission in two downlink subbands of the SBFD symbol. The PDSCH occupies 10 RBs in a downlink subband A (i.e., the number of scheduled PDSCH RBs in downlink subband A is 10) and 25 RBs in the other downlink subband B (i.e., the number of scheduled PDSCH RBs in downlink subband B is 25). Therefore, since the number of PDSCH RBs in downlink subband A is less than the threshold value, that is, the number of scheduled PDSCH RBs in one of the two downlink subbands is less than the threshold value, the terminal uses 2 as the PRG size in both downlink subbands.
Case 2: The threshold value is half the DL subband size, i.e., 40/2 = 20 RBs. The terminal is scheduled to perform PDSCH transmission in two downlink subbands of the SBFD symbol. The PDSCH occupies 25 RBs in a downlink subband A (i.e., the number of scheduled PDSCH RBs in downlink subband A is 25) and 25 RBs in the other downlink subband B (i.e., the number of scheduled PDSCH RBs in downlink subband B is 25). Therefore, since the number of PDSCH RBs in both downlink subbands is greater than the threshold value, that is, the number of scheduled PDSCH RBs in each downlink subband is greater than the threshold value, the terminal uses wideband as the PRG size in both downlink subbands.
Case 3: The threshold value is $\left({N}_{BWP , i}^{size}-{N}_{ULsb}^{size}-{N}_{GB}^{size}\right) / x = \left(100-10-10\right) / 4 = 20 RBs$ , and the rest is the same as Case 1;
Case 4: The threshold value is $\left({N}_{BWP , i}^{size}-{N}_{ULsb}^{size}-{N}_{GB}^{size}\right) / x = \left(100-10-10\right) / 4 = 20 RBs$ , and the rest is the same as Case 2.

Example 7: The scenario is similar to Example 3; at this time, for the case that the PDSCH transmission is in two downlink subbands, the terminal determines the PRG size in both downlink subbands by comparing the number of scheduled PDSCH RBs in the target downlink subband with a threshold value.
Case 1: The threshold value is half the DL subband size, i.e., 40/2 = 20 RBs. The terminal is scheduled to perform PDSCH transmission in two downlink subbands of the SBFD symbol. The PDSCH occupies 10 RBs in a downlink subband A (i.e., the number of scheduled PDSCH RBs in downlink subband A is 10) and 25 RBs in the other downlink subband B (i.e., the number of scheduled PDSCH RBs in downlink subband B is 25). Therefore, since the resources scheduled for PDSCH in downlink subband A (i.e., downlink subband A is the target downlink subband) are less, and less than the threshold value, in other words, the number of scheduled PDSCH RBs in the target downlink subband is less than the threshold value, the terminal uses 2 as the PRG size in both downlink subbands.
Case 2: The threshold value is half the DL subband size, i.e., 40/2 = 20 RBs. The terminal is scheduled to perform PDSCH transmission in two downlink subbands of the SBFD symbol. The PDSCH occupies 25 RBs in a downlink subband A (i.e., the number of scheduled PDSCH RBs in downlink subband A is 25) and 30 RBs in the other downlink subband B (i.e., the number of scheduled PDSCH RBs in downlink subband B is 30). Therefore, since the resources scheduled for PDSCH in downlink subband A (i.e., downlink subband A is the target downlink subband) are less but greater than the threshold value, in other words, the number of scheduled PDSCH RBs in the target downlink subband is greater than the threshold value, the terminal uses wideband as the PRG size in both downlink subbands.
Case 3: The threshold value is $\left({N}_{BWP , i}^{size}-{N}_{ULsb}^{size}-{N}_{GB}^{size}\right) / x = \left(100-10-10\right) / 4 = 20 RBs$ , and the rest is the same as Case 1;
Case 4: The threshold value is $\left({N}_{BWP , i}^{size}-{N}_{ULsb}^{size}-{N}_{GB}^{size}\right) / x = \left(100-10-10\right) / 4 = 20 RBs$ , and the rest is the same as Case 2.

Example 8: The scenario is similar to Example 1, Example 2, or Example 3; at this time, the terminal determines the PRG size by comparing a number of scheduled PDSCH symbols with the threshold value.

Case 1: The threshold value is half the number of symbols per slot. The PDSCH transmission scheduled for the terminal occupies 8 OFDM symbols in the time domain. Each slot contains 14 OFDM symbols. Therefore, the number of OFDM symbols occupied by the PDSCH transmission exceeds half the number of symbols per slot. In other words, a number of scheduled PDSCH symbols is greater than the threshold value. Then the terminal uses wideband as the PRG size.

Case 2: The threshold value is half the number of symbols per slot. The PDSCH transmission scheduled for the terminal occupies 4 OFDM symbols in the time domain. Each slot contains 14 OFDM symbols. Therefore, the number of OFDM symbols occupied by the PDSCH transmission is less than half the number of symbols per slot. In other words, a number of scheduled PDSCH symbols is less than the threshold value. Then the terminal uses 2 as the PRG size.

Example 9: The scenario is similar to Example 1, Example 2, or Example 3; at this time, the terminal determines the PRG size according to preset conditions, that is, based on whether a number of scheduled PDSCH symbols is even or odd.

Case 1: If the PDSCH transmission scheduled for the terminal occupies 7 OFDM symbols in the time domain, since the number of OFDM symbols occupied by the PDSCH transmission (i.e., a number of scheduled PDSCH symbols) is odd, the terminal uses wideband as the PRG size; if the PDSCH transmission scheduled for the terminal occupies 8 OFDM symbols in the time domain, since the number of OFDM symbols occupied by the PDSCH transmission (i.e., a number of scheduled PDSCH symbols) is even, the terminal uses 2 as the PRG size.

Case 2: If the PDSCH transmission scheduled for the terminal occupies 7 OFDM symbols in the time domain, since the number of OFDM symbols occupied by the PDSCH transmission (i.e., a number of scheduled PDSCH symbols) is odd, the terminal uses 2 as the PRG size; if the PDSCH transmission scheduled for the terminal occupies 8 OFDM symbols in the time domain, since the number of OFDM symbols occupied by the PDSCH transmission (i.e., a number of scheduled PDSCH symbols) is even, the terminal uses wideband as the PRG size.

In summary, in the method according to embodiments of this disclosure, when dynamic PRG is configured in an SBFD system, if there are two downlink subbands in the BWP when the PDSCH transmission is located in an SBFD symbol, the PRG size is determined based on the PDSCH transmission parameter and related reference information, thus ensuring the flexibility of dynamic PRG size determination.

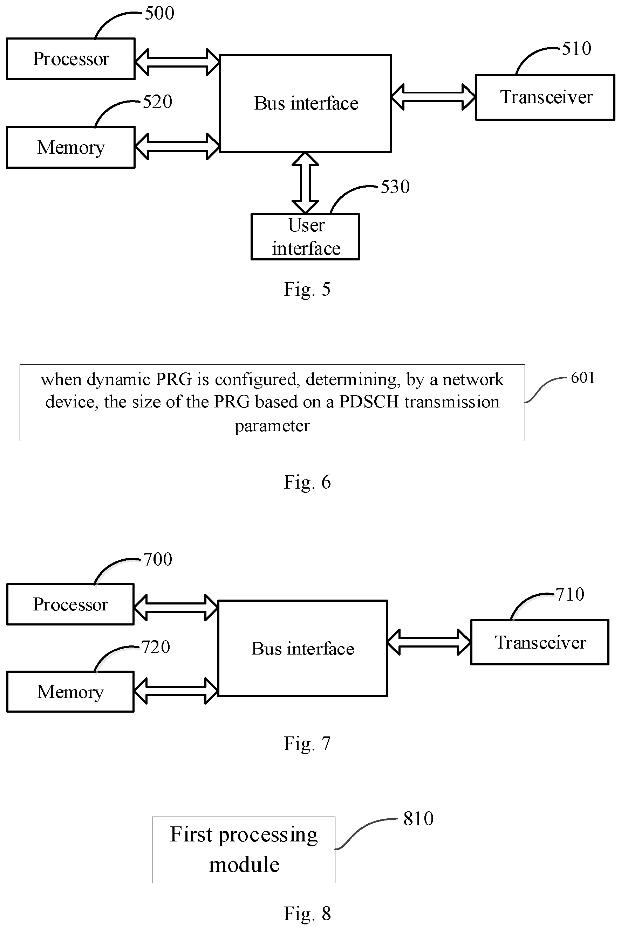

As shown in Fig. 5, an embodiment of this disclosure also provides an apparatus for determining a size of a physical resource group, including: a memory 520, a transceiver 510, and a processor 500: the memory 520 is used for storing program instructions; the transceiver 510 is used for sending and receiving data under the control of the processor 500; the processor 500 is used for reading the program instructions in the memory 520 and performing the following step:
when dynamic physical resource group (PRG) is configured, determining the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

In Fig. 5, the bus architecture can include any number of interconnected buses and bridges, specifically linking various circuits of one or more processors represented by processor 500 and memory represented by memory 520. The bus architecture can also link various other circuits such as peripheral devices, voltage regulators, and power management circuits, which are well known in the art and therefore will not be described further herein. The bus interface provides an interface. Transceiver 510 can be multiple components, including a transmitter and a receiver, providing a unit for communicating with various other devices over transmission media, including wireless channels, wired channels, optical fibers, etc. For different user equipment, user interface 530 can also be an interface capable of connecting external or internal devices, including but not limited to keypads, displays, speakers, microphones, joysticks, etc. Processor 500 is responsible for managing the bus architecture and general processing, and memory 520 can store data used by processor 500 during operation.

The processor 500 can be a central processing unit (CPU), an application-specific integrated circuit (ASIC), a field-programmable gate array (FPGA), or a complex programmable logic device (CPLD). The processor can also adopt a multicore architecture.

In some embodiments, the processor is further used for performing the following step:
determining the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

In some embodiments, the processor is further used for performing the following step:
determining the size of the PRG based on the number of scheduled PDSCH symbols in the PDSCH transmission parameter and the threshold value in the reference information.

In some embodiments, the processor is further used for performing the following step:
determining the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

In some embodiments, the processor is further used for performing the following steps:
determining a first comparison result and/or a second comparison result based on the number of scheduled PDSCH RBs of downlink subband in the PDSCH transmission parameter and the threshold value in the reference information; and
determining the size of the PRG based on the second correspondence, and the first comparison result and/or the second comparison result.

In some embodiments, the processor is further used for performing the following step:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

In some embodiments, the threshold value is determined by a number of symbols per slot.

In some embodiments, the threshold value is determined by a downlink subband size; or,
the threshold value is determined by a bandwidth of a bandwidth part (BWP) where a PDSCH is located, an uplink subband size, and a guard interval size.

In some embodiments, the downlink subband size is a size of a downlink subband where a PDSCH is located; or
the downlink subband size is a size of a downlink subband with the largest or smallest number of RBs among two downlink subbands.

In some embodiments, the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

In some embodiments, the reference information is configured through radio resource control (RRC) signaling.

This apparatus is applied in a terminal.

In the apparatus according to the embodiments of this disclosure, in the case that dynamic PRG is configured, the PRG size can be determined according to the PDSCH transmission parameter (i.e., at least one of a number of scheduled PDSCH symbols or a number of scheduled PDSCH RBs of downlink subband), so as to realize the determination of PRG size in the SBFD slot or symbol and ensure the flexibility of dynamic PRG size determination.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

As shown in Fig. 6, an embodiment of this disclosure also provides a method for determining a size of a physical resource group, including:
Step 601: when dynamic physical resource group (PRG) is configured, determining, by a network device, the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

Thus, in the method for determining the physical resource group size in this embodiment of this disclosure, which is performed by a network side device (such as a base station), in the case that dynamic PRG is configured, the PRG size can be determined according to the PDSCH transmission parameter (i.e., at least one of a number of scheduled PDSCH symbols or a number of scheduled PDSCH RBs of downlink subband), so as to realize the determination of PRG size in the SBFD slot or symbol and ensure the flexibility of dynamic PRG size determination.

In some embodiments, the method further includes:
determining, by the network device, the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

Here, the reference information is information related to determining the PRG size.

In some embodiments, the method further includes:
determining, by the network device, the size of the PRG based on the number of scheduled PDSCH symbols in the PDSCH transmission parameter and the threshold value in the reference information.

That is, the network device can compare the number of scheduled PDSCH symbols with the corresponding threshold value, and determine the PRG size based on the comparison result.

In some embodiments, when the comparison result is that a number of scheduled PDSCH symbols is greater than the threshold value, the PRG size is determined to be the first candidate value in the configuration that corresponds to the PRG and is indicated by DCI; when the comparison result is that a number of scheduled PDSCH symbols is less than or equal to the threshold value, the PRG size is determined to be the second candidate value in the configuration that corresponds to the PRG and is indicated by DCI.

In other words, the network device compares a number of scheduled PDSCH symbols with the threshold value. If the number of scheduled PDSCH symbols is greater than the threshold value, the PRG size is determined as the first candidate value; if the number of scheduled PDSCH symbols is less than or equal to the threshold value, the PRG size is determined as the second candidate value.

In some embodiments, the method further includes:
determining, by the network device, the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

That is, based on a number of scheduled PDSCH symbols and the first correspondence, the network device can determine the PRG size as the first candidate value when a number of scheduled PDSCH symbols is odd, and determine the PRG size as the second candidate value when a number of scheduled PDSCH symbols is even.

In some embodiments, the method further includes:
determining, by the network device, a first comparison result and/or a second comparison result based on the number of scheduled PDSCH RBs of downlink subband in the PDSCH transmission parameter and the threshold value in the reference information; and
determining, by the network device, the size of the PRG based on the second correspondence, and the first comparison result and/or the second comparison result.

In some embodiments, the determining, by the network device, the first comparison result and/or the second comparison result based on the number of scheduled PDSCH RBs of downlink subband in the PDSCH transmission parameter and the threshold value in the reference information includes:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In other words, when PDSCH transmission occurs in one downlink subband, the network side device compares the number of scheduled PDSCH RBs in that downlink subband with the threshold value, and then determines the PRG size based on the comparison result. When the PDSCH transmission is in two downlink subbands, in one manner, the network side device compares the total number of scheduled PDSCH RBs in both downlink subbands with the threshold value, and then determines the PRG size based on the comparison result; or, the network side device compares the numbers of scheduled PDSCH RBs in the two downlink subbands with the threshold value, and then determines the PRG size based on the comparison results; or, the network side device compares the number of scheduled PDSCH RBs in the target downlink subband (the downlink subband with the smallest or largest number of scheduled PDSCH RBs) with the threshold value, and then determines the PRG size based on the comparison result.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

Thus, when PDSCH transmission occurs in one downlink subband, the network device compares the number of scheduled PDSCH RBs in that downlink subband with the threshold value. If the first comparison result indicates that the number of scheduled PDSCH RBs is greater than the threshold value, the PRG size is determined as the first candidate value; if the first comparison result indicates that the number of scheduled PDSCH RBs is less than or equal to the threshold value, the PRG size is determined as the second candidate value.

When PDSCH transmission occurs in two downlink subbands, the network device compares the total number of scheduled PDSCH RBs in these two downlink subbands with the threshold value. If the second comparison result indicates that the total number is greater than the threshold value, the PRG size is determined as the first candidate value; if the second comparison result indicates that the total number is less than or equal to the threshold value, the PRG size is determined as the second candidate value.

When PDSCH transmission occurs in two downlink subbands, the network device compares the number of scheduled PDSCH RBs in each of the two downlink subbands with the threshold value. If the second comparison result indicates that the number of scheduled PDSCH RBs within one of the two downlink subbands is greater than the threshold value, then the PRG size in each downlink subband is determined to be the first candidate value; or if the second comparison result indicates that the number of scheduled PDSCH RBs in both downlink subbands is less than or equal to the threshold value, the PRG size in each downlink subband is determined to be the second candidate value; or if the second comparison result indicates that the number of scheduled PDSCH RBs in both downlink subbands is greater than the threshold value, the PRG size in each downlink subband is determined to be the first candidate value; or if the second comparison result indicates that the number of scheduled PDSCH RBs in one of the two downlink subbands is less than or equal to the threshold value, then the PRG size in each downlink subband is determined to be the second candidate value.

Here, following the above method, when PDSCH transmission occurs in two downlink subbands, the network device can determine the same PRG size for both downlink subbands.

When PDSCH transmission occurs in two downlink subbands, the network device compares the number of scheduled PDSCH RBs in the target downlink subband with the threshold value. If the second comparison result indicates that the number of scheduled PDSCH RBs is greater than the threshold value, the network device determines that the PRG size in each downlink subband is the first candidate value. If the second comparison result indicates that the number of scheduled PDSCH RBs is less than or equal to the threshold value, the network device determines that the PRG size in each downlink subband is the second candidate value.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

As a result, when PDSCH transmission is in two downlink subbands, the network device can determine the PRG size for each of the two downlink subbands based on the comparison between the number of scheduled PDSCH RBs in each downlink subband and a threshold value. In this case, the PRG sizes in the two downlink subbands can be the same or different. For example, if the numbers of scheduled PDSCH RBs in both downlink subband 1 and downlink subband 2 are greater than the threshold value, then the PRG size in both downlink subbands is the first candidate value; if the number of scheduled PDSCH RBs in downlink subband 1 is greater than the threshold value, and the number of scheduled PDSCH RBs in downlink subband 2 is less than the threshold value, then the PRG size in downlink subband 1 is the first candidate value, and the PRG size in downlink subband 2 is the second candidate value.

In some embodiments, the threshold value is determined by a number of symbols per slot. In this case, the threshold value is used for comparison with a number of scheduled PDSCH symbols. Specifically, the threshold value may be equal to half the number of symbols per slot.

In some embodiments, the threshold value is determined by a downlink subband size; or, the threshold value is determined by the bandwidth of the bandwidth part (BWP) where the PDSCH is located, an uplink subband size, and a guard interval size. In this case, the threshold value is used for comparison with the number of scheduled PDSCH RBs in the downlink subband. Specifically, the threshold value can be equal to half the downlink subband size (DL subband size); or, the threshold value can be equal to $\left({N}_{BWP , i}^{size}-{N}_{ULsb}^{size}-{N}_{GB}^{size}\right) / x$. Where, ${N}_{BWP , i}^{size}$ is the bandwidth of the BWP where the PDSCH is located, ${N}_{ULsb}^{size}$ is the uplink subband size, ${N}_{GB}^{size}$ is the guard interval size, and *x* is a preset value (e.g., 2 or 4).

When *x* = 2, the threshold value is applicable to a scenario in which, when PDSCH transmission is in two downlink subbands, the network device determines the PRG size by comparing the total number of scheduled PDSCH RBs in the two downlink subbands with the threshold value; when *x* = 4, the threshold value is applicable to other scenarios.

In some embodiments, the downlink subband size is a size of a downlink subband where a PDSCH is located; or
the downlink subband size is a size of a downlink subband with the largest or smallest number of RBs among two downlink subbands.

That is, when the threshold value is determined by the DL subband size, the DL subband size can be the size of the downlink subband where the PDSCH is located; the DL subband size can also be the size of the downlink subband with the most RBs in the two downlink subbands, or the size of the downlink subband with the fewest RBs in the two downlink subbands.

In some embodiments, the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

In some embodiments, the reference information is predefined or preconfigured in the network side device. Of course, the network side device may also inform the terminal of the reference information via RRC message, so that the terminal can use it to determine the PRG size.

In some embodiments, the network side device may determine the PRG size, and may also based on the determined PRG size.

It should also be noted that the implementations of the method embodiments performed by the terminal described above are applicable to the method according to this embodiment of this disclosure, and will not be repeated here.

As shown in Fig. 7, an embodiment of this disclosure also provides an apparatus for determining a size of a physical resource group, including: a memory 720, a transceiver 710, and a processor 700: the memory 720 is used for storing program instructions; the transceiver 710 is used for sending and receiving data under the control of the processor 700; the processor 700 is used for reading the program instructions in the memory 720 and performing the following step:
when dynamic physical resource group (PRG) is configured, determining the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

In Fig. 7, the bus architecture can include any number of interconnected buses and bridges, specifically linking various circuits of one or more processors represented by processor 700 and memory represented by memory 720. The bus architecture can also link various other circuits such as peripheral devices, voltage regulators, and power management circuits, which are well known in the art and therefore will not be described further herein. The bus interface provides an interface. The transceiver 710 can be multiple elements, including a transmitter and a receiver, providing a unit for communicating with various other devices over a transmission medium, including wireless channels, wired channels, optical fibers, etc. Processor 700 is responsible for managing the bus architecture and general processing, and memory 720 can store data used by processor 700 during operation.

The processor 700 can be a central processing unit (CPU), an application-specific integrated circuit (ASIC), a field-programmable gate array (FPGA), or a complex programmable logic device (CPLD). The processor can also adopt a multicore architecture.

In some embodiments, the processor is also configured to perform the following step:
determining the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

In some embodiments, the processor is also configured to perform the following step:
determining the size of the PRG based on the number of scheduled PDSCH symbols in the PDSCH transmission parameter and the threshold value in the reference information.

In some embodiments, the processor is also configured to perform the following step:
determining the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

In some embodiments, the processor is also configured to perform the following steps:
determining a first comparison result and/or a second comparison result based on the number of scheduled PDSCH RBs of downlink subband in the PDSCH transmission parameter and the threshold value in the reference information; and
determining the size of the PRG based on the second correspondence, and the first comparison result and/or the second comparison result.

In some embodiments, the processor is also configured to perform the following step:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

In some embodiments, the threshold value is determined by a number of symbols per slot.

In some embodiments, the threshold value is determined by a downlink subband size; or,
the threshold value is determined by a bandwidth of a bandwidth part (BWP) where a PDSCH is located, an uplink subband size, and a guard interval size.

In some embodiments, the downlink subband size is a size of a downlink subband where a PDSCH is located; or
the downlink subband size is a size of a downlink subband with the largest or smallest number of RBs among two downlink subbands.

In some embodiments, the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

In some embodiments, the reference information is predefined or preconfigured in the network side device. Of course, the network side device may also inform the terminal of the reference information via RRC message, so that the terminal can use it to determine the PRG size.

This apparatus is applied in a network device.

In the apparatus according to the embodiments of this disclosure, in the case that dynamic PRG is configured, the PRG size can be determined according to the PDSCH transmission parameter (i.e., at least one of a number of scheduled PDSCH symbols or a number of scheduled PDSCH RBs of downlink subband), so as to realize the determination of PRG size in the SBFD slot or symbol and ensure the flexibility of dynamic PRG size determination.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

As shown in Fig. 8, an embodiment of this disclosure also provides an apparatus for determining a size of a physical resource group, including:
a first processing module 810, configured to, when dynamic physical resource group (PRG) is configured, determine the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

In some embodiments, the first processing module is further configured to:
determine the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

In some embodiments, the first processing module is further configured to:
determine the size of the PRG based on the number of scheduled PDSCH symbols in the PDSCH transmission parameter and the threshold value in the reference information.

In some embodiments, the first processing module is further configured to:
determine the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

In some embodiments, the first processing module is further configured to:
determine a first comparison result and/or a second comparison result based on the number of scheduled PDSCH RBs of downlink subband in the PDSCH transmission parameter and the threshold value in the reference information; and
determine the size of the PRG based on the second correspondence, and the first comparison result and/or the second comparison result.

In some embodiments, the first processing module is further configured to:
in a case that PDSCH transmission is in one downlink subband, determine the first comparison result by comparing a number of scheduled PDSCH RBs in the one downlink subband with the threshold value; or
in a case that the PDSCH transmission is in two downlink subbands, determine the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

In some embodiments, the threshold value is determined by a number of symbols per slot.

In some embodiments, the threshold value is determined by a downlink subband size; or,
the threshold value is determined by a bandwidth of a bandwidth part (BWP) where a PDSCH is located, an uplink subband size, and a guard interval size.

In some embodiments, the downlink subband size is a size of a downlink subband where a PDSCH is located; or
the downlink subband size is a size of a downlink subband with the largest or smallest number of RBs among two downlink subbands.

In some embodiments, the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

In some embodiments, the reference information is configured through radio resource control (RRC) signaling.

This apparatus is applied in a terminal.

In the apparatus according to the embodiments of this disclosure, in the case that dynamic PRG is configured, the PRG size can be determined according to the PDSCH transmission parameter (i.e., at least one of a number of scheduled PDSCH symbols or a number of scheduled PDSCH RBs of downlink subband), so as to realize the determination of PRG size in the SBFD slot or symbol and ensure the flexibility of dynamic PRG size determination.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

In some embodiments of this disclosure, a processor-readable storage medium is also provided, the processor-readable storage medium storing program instructions for causing a processor to perform the following step:
when dynamic physical resource group (PRG) is configured, determining the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

In some embodiments, the step further includes:
determining the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

In some embodiments, the step further includes:
determining the size of the PRG based on the number of scheduled PDSCH symbols in the PDSCH transmission parameter and the threshold value in the reference information.

In some embodiments, the step further includes:
determining the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

In some embodiments, the step further includes:
determining a first comparison result and/or a second comparison result based on the number of scheduled PDSCH RBs of downlink subband in the PDSCH transmission parameter and the threshold value in the reference information; and
determining the size of the PRG based on the second correspondence, and the first comparison result and/or the second comparison result.

In some embodiments, the step further includes:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

In some embodiments, the threshold value is determined by a number of symbols per slot.

In some embodiments, the threshold value is determined by a downlink subband size; or,
the threshold value is determined by a bandwidth of a bandwidth part (BWP) where a PDSCH is located, an uplink subband size, and a guard interval size.

In some embodiments, the downlink subband size is a size of a downlink subband where a PDSCH is located; or
the downlink subband size is a size of a downlink subband with the largest or smallest number of RBs among two downlink subbands.

In some embodiments, the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

In some embodiments, the reference information is configured through radio resource control (RRC) signaling.

When the program instructions are executed by the processor, all the above-described method embodiments performed by the terminal side as shown in Fig. 1 can be implemented. To avoid repetition, they will not be described again here.

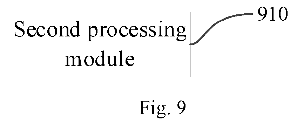

As shown in Fig. 9, an embodiment of this disclosure also provides an apparatus for determining a size of a physical resource group, including:
a second processing module 910, configured to, when dynamic physical resource group (PRG) is configured, determine the size of the PRG based on a physical downlink shared channel (PDSCH) transmission parameter;
wherein the PDSCH transmission parameter includes at least one of the following:
   a number of scheduled PDSCH symbols; or
   a number of scheduled PDSCH resource blocks (RBs) of downlink subband.

In some embodiments, the second processing module is further configured to:
determine the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

In some embodiments, the second processing module is further configured to:
determine the size of the PRG based on the number of scheduled PDSCH symbols in the PDSCH transmission parameter and the threshold value in the reference information.

In some embodiments, the second processing module is further configured to:
determine the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

In some embodiments, the second processing module is further configured to:
determine a first comparison result and/or a second comparison result based on the number of scheduled PDSCH RBs of downlink subband in the PDSCH transmission parameter and the threshold value in the reference information; and
determine the size of the PRG based on the second correspondence, and the first comparison result and/or the second comparison result.

In some embodiments, the second processing module is further configured to:
in a case that PDSCH transmission is in one downlink subband, determine the first comparison result by comparing a number of scheduled PDSCH RBs in the one downlink subband with the threshold value; or
in a case that the PDSCH transmission is in two downlink subbands, determine the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

In some embodiments, the threshold value is determined by a number of symbols per slot.

In some embodiments, the threshold value is determined by a downlink subband size; or,
the threshold value is determined by a bandwidth of a bandwidth part (BWP) where a PDSCH is located, an uplink subband size, and a guard interval size.

In some embodiments, the downlink subband size is a size of a downlink subband where a PDSCH is located; or
the downlink subband size is a size of a downlink subband with the largest or smallest number of RBs among two downlink subbands.

In some embodiments, the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

This apparatus is an apparatus that applies the aforementioned method executed by the network device. The implementations of the above-described method embodiments are applicable to this apparatus and can achieve the same technical effect.

In some embodiments of this disclosure, a processor-readable storage medium is also provided, the processor-readable storage medium storing program instructions for causing the processor to perform the following step:
when dynamic physical resource group (PRG) is configured, determining the size of the PRG based on a physical downlink shared channel (PDSCH) transmission parameter;
wherein the PDSCH transmission parameter includes at least one of the following:
   a number of scheduled PDSCH symbols; or

The number of PDSCH resource blocks (RBs) in downlink subband scheduling.

In some embodiments, the step further includes:
determining the size of the PRG based on reference information and the PDSCH transmission parameter; wherein the reference information includes at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

In some embodiments, the step further includes:
determining the size of the PRG based on the number of scheduled PDSCH symbols in the PDSCH transmission parameter and the threshold value in the reference information.

In some embodiments, the step further includes:
determining the size of the PRG based on the first correspondence between the number of scheduled PDSCH symbols in the PDSCH transmission parameter and the candidate value in the configuration that corresponds to the PRG and is indicated by DCI;
wherein the first correspondence includes:
   in a case that the number of scheduled PDSCH symbols is odd, the size of the PRG is a first candidate value in the configuration that corresponds to the PRG and is indicated by DCI;
   in a case that the number of scheduled PDSCH symbols is even, the size of the PRG is a second candidate value in the configuration that corresponds to the PRG and is indicated by DCI.

In some embodiments, the step further includes:
determining a first comparison result and/or a second comparison result based on the number of scheduled PDSCH RBs of downlink subband in the PDSCH transmission parameter and the threshold value in the reference information; and
determining the size of the PRG based on the second correspondence, and the first comparison result and/or the second comparison result.

In some embodiments, the step further includes:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

In some embodiments, the second correspondence includes at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

In some embodiments, the second correspondence includes at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

In some embodiments, the threshold value is determined by a number of symbols per slot.

In some embodiments, the threshold value is determined by a downlink subband size; or,
the threshold value is determined by a bandwidth of a bandwidth part (BWP) where a PDSCH is located, an uplink subband size, and a guard interval size.

In some embodiments, the downlink subband size is a size of a downlink subband where a PDSCH is located; or
the downlink subband size is a size of a downlink subband with the largest or smallest number of RBs among two downlink subbands.

In some embodiments, the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

When the program instructions are executed by the processor, all the above-described implementations of the method embodiment performed by the network side as shown in Fig. 6 can be implemented. To avoid repetition, they will not be described again here.

The technical solutions provided in the embodiments of this disclosure are applicable to a variety of systems, especially 5G systems. For example, applicable systems may include Global System for Mobile communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunication System (UMTS), Worldwide Interoperability for Microwave Access (WiMAX), and 5G New Radio (NR). All of these systems include a terminal device and a network device. The system may also include a core network component, such as the Evolved Packet System (EPS) or the 5G system (5GS).

The terminal devices involved in the embodiments of this disclosure can be devices that provide voice and/or data connectivity to users, handheld devices with wireless connectivity, or other processing devices connected to a wireless modem. The names of the terminal devices may differ in different systems; for example, in a 5G system, a terminal device can be called User Equipment (UE). Wireless terminal devices can communicate with one or more core networks (CNs) via a Radio Access Network (RAN). Wireless terminal devices can be mobile terminal devices, such as mobile phones (or "cellular" phones) and computers with mobile terminal devices, for example, portable, pocket-sized, handheld, computer-embedded, or vehicle-mounted mobile devices that exchange voice and/or data with the RAN. Examples include Personal Communication Service (PCS) phones, cordless phones, Session Initiated Protocol (SIP) phones, Wireless Local Loop (WLL) stations, and Personal Digital Assistants (PDAs). Wireless terminal device can also be referred to as a system, subscriber unit, subscriber station, mobile station, mobile, remote station, access point, remote terminal, access terminal, user terminal, user agent, or user device, but this is not limited to these terms in the embodiments disclosed herein.

The network device involved in this embodiment may be a base station, which may include multiple cells providing services to terminals. Depending on the specific application, the base station may also be called an access point, or a device in the access network that communicates with the wireless terminal device through one or more sectors on the air interface, or other names. The network device may be used to exchange received air frames with Internet Protocol (IP) packets, acting as a router between the wireless terminal device and the rest of the access network, which may include an Internet Protocol (IP) communication network. The network device may also coordinate the attribute management of the air interface. For example, the network device involved in this disclosure can be a base transceiver station (BTS) in Global System for Mobile communications (GSM) or Code Division Multiple Access (CDMA), or a NodeB in Wide-band Code Division Multiple Access (WCDMA). It can also be an evolved network device (eNB or e-NodeB) in a Long Term Evolution (LTE) system, a 5G base station (gNB) in a next-generation 5G network architecture, or a Home evolved Node B (HeNB), relay node, femto, pico, etc. This disclosure does not limit the scope of the network device involved. In some network architectures, network devices may include centralized unit (CU) nodes and distributed unit (DU) nodes, which may also be geographically separated.

Network devices and terminal devices can each use one or more antennas for Multiple Input Multiple Output (MIMO) transmission. MIMO transmission can be Single User MIMO (SU-MIMO) or Multiple User MIMO (MU-MIMO). Depending on the configuration and number of antenna combinations, MIMO transmission can be 2D-MIMO, 3D-MIMO, FD-MIMO, or massive-MIMO, and can also be diversity transmission, precoding transmission, or beamforming transmission, etc.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to the prior art, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

Those skilled in the art will understand that embodiments of this disclosure can be provided as methods, systems, or computer program products. Therefore, this disclosure can take the form of a completely hardware embodiment, a completely software embodiment, or an embodiment combining software and hardware aspects. Furthermore, this disclosure can take the form of a computer program product embodied on one or more computer-usable storage media (including, but not limited to, disk storage and optical storage) containing computer-usable program codes.

This disclosure is described with reference to flowchart illustrations and/or block diagrams of methods, apparatus (systems), and computer program products according to embodiments of this disclosure. It will be understood that each block of the flowchart illustrations and/or block diagrams, and combinations of blocks in the flowchart illustrations and/or block diagrams, can be implemented by computer-executable instructions. These computer-executable instructions can be provided to a processor of a general-purpose computer, special-purpose computer, embedded processor, or other programmable data processing apparatus to produce a machine, such that the instructions, which execute via the processor of the computer or other programmable data processing apparatus, create means for implementing the functions specified in one or more flowchart illustrations and/or one or more block diagrams.

These processor-executable instructions may also be stored in a processor-readable memory that can instruct a computer or other programmable data processing device to operate in a particular manner, such that the instructions stored in the processor-readable memory produce an article of manufacture including instruction means that implement the functions specified in one or more flowcharts and/or one or more block diagrams.

These processor-executable instructions can also be loaded onto a computer or other programmable data processing apparatus to cause a series of operational steps to be performed on the computer or other programmable apparatus to produce a computer-implemented process, such that the instructions, which execute on the computer or other programmable apparatus, provide steps for implementing the functions specified in one or more flowcharts and/or one or more block diagrams.

Furthermore, it should be noted that in the apparatus and method of this disclosure, it is obvious that the components or steps can be decomposed and/or recombined. These decompositions and/or re-combinations should be considered equivalent solutions of this disclosure. Moreover, the steps performing the above series of processes can naturally be executed in the order described, but are not necessarily required to be executed in chronological order; some steps can be executed in parallel or independently of each other. Those skilled in the art will understand that all or any step or component of the method and apparatus of this disclosure can be implemented in any computing device (including processors, storage media, etc.) or network of computing devices, in hardware, firmware, software, or a combination thereof, which can be achieved by those skilled in the art using their basic programming skills after reading the description of this disclosure.

It should be noted that the above division of modules is merely a logical functional division. In actual implementation, they can be fully or partially integrated into a single physical entity, or they can be physically separated. Furthermore, these modules can be implemented entirely in software via processing element calls; they can be fully implemented in hardware; or some modules can be implemented by processing element calls to software, while others are implemented in hardware. For example, a module can be a separate processing element, or it can be integrated into a chip in the aforementioned device. Alternatively, it can be stored as program codes in the memory of the aforementioned device, and its function can be called and executed by a processing element of the device. The implementation of other modules is similar. Moreover, these modules can be fully or partially integrated together, or they can be implemented independently. The processing element mentioned here can be an integrated circuit with signal processing capabilities. In the implementation process, each step of the above method or each of the above modules can be completed through integrated logic circuits in the hardware of the processor element or through software instructions.

For example, each module, unit, subunit, or submodule can be one or more integrated circuits configured to implement the above methods, such as one or more application-specific integrated circuits (ASICs), one or more digital signal processors (DSPs), or one or more field-programmable gate arrays (FPGAs). As another example, when a module is implemented using processing element scheduler code, the processing element can be a general-purpose processor, such as a central processing unit (CPU) or other processor capable of calling program codes. Furthermore, these modules can be integrated together to implement a system-on-a-chip (SOC).

The terms "first", "second" and the like used in the description and claims of this disclosure are used to distinguish similar objects and are not necessarily used to describe a specific order or sequence. It should be understood that such data can be interchanged where appropriate so that embodiments of this disclosure described herein may be implemented in orders other than those illustrated or described herein. Furthermore, the terms "including" and "having", and any variations thereof, are intended to cover non-exclusive inclusion; for example, a process, method, system, product, or apparatus that includes a series of steps or units is not necessarily limited to those steps or units explicitly listed, but may include other steps or units not explicitly listed or inherent in such processes, methods, products, or apparatus. Additionally, the use of "and/or" in the specification and claims indicates at least one of the connected objects, such as A and/or B and/or C, indicating seven possibilities: A alone, B alone, C alone, and both A and B, both B and C, both A and C, and A, B, and C. Similarly, the use of "at least one of A or B" in this specification and claims should be understood as "A alone, B alone, or both A and B."

Obviously, those skilled in the art can make various modifications and variations to this disclosure without departing from its spirit and scope. Therefore, if such modifications and variations fall within the scope of the claims of this disclosure and their equivalents, this disclosure is also intended to include such modifications and variations.

## Claims

1. A method for determining a size of a physical resource group, comprising:
when dynamic physical resource group (PRG) is configured, determining, by a terminal, the size of the PRG based on a physical downlink shared channel (PDSCH) transmission parameter;
wherein the PDSCH transmission parameter comprises at least one of the following:
a number of scheduled PDSCH symbols; or
a number of scheduled PDSCH resource blocks (RBs) of downlink subband.

2. The method according to claim 1, further comprising:
determining, by the terminal, the size of the PRG based on reference information and the PDSCH transmission parameter; wherein the reference information comprises at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

3. The method according to claim 2, further comprising:
determining, by the terminal, the size of the PRG based on the number of scheduled PDSCH symbols in the PDSCH transmission parameter and the threshold value in the reference information.

4. The method according to claim 2, further comprising:
determining, by the terminal, the size of the PRG based on the first correspondence between the number of scheduled PDSCH symbols in the PDSCH transmission parameter and the candidate value in the configuration that corresponds to the PRG and is indicated by DCI;
wherein the first correspondence comprises:
in a case that the number of scheduled PDSCH symbols is odd, the size of the PRG is a first candidate value in the configuration that corresponds to the PRG and is indicated by DCI;
in a case that the number of scheduled PDSCH symbols is even, the size of the PRG is a second candidate value in the configuration that corresponds to the PRG and is indicated by DCI.

5. The method according to claim 2, further comprising:
determining, by the terminal, a first comparison result and/or a second comparison result based on the number of scheduled PDSCH RBs of downlink subband in the PDSCH transmission parameter and the threshold value in the reference information; and
determining, by the terminal, the size of the PRG based on the second correspondence, and the first comparison result and/or the second comparison result.

6. The method according to claim 5, wherein the determining, by the terminal, the first comparison result and/or the second comparison result based on the number of scheduled PDSCH RBs of downlink subband in the PDSCH transmission parameter and the threshold value in the reference information comprises:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

7. The method according to claim 5, wherein the second correspondence comprises at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

8. The method according to claim 5, wherein the second correspondence comprises at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

9. The method according to claim 3, wherein the threshold value is determined by a number of symbols per slot.

10. The method according to any one of claims 5 to 8, wherein the threshold value is determined by a downlink subband size; or,
the threshold value is determined by a bandwidth of a bandwidth part (BWP) where a PDSCH is located, an uplink subband size, and a guard interval size.

11. The method according to claim 10, wherein the downlink subband size is a size of a downlink subband where a PDSCH is located; or,
the downlink subband size is a size of a downlink subband with the largest or smallest number of RBs among two downlink subbands.

12. The method according to claim 10, wherein the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

13. The method according to claim 2, wherein the reference information is configured through radio resource control (RRC) signaling.

14. An apparatus for determining a size of a physical resource group, comprising: a memory, a transceiver, and a processor;
wherein the memory is used for storing program instructions; the transceiver is used for sending and receiving data under the control of the processor; the processor is used for reading the program instructions from the memory and performing the following step:
when dynamic physical resource group (PRG) is configured, determining the size of the PRG based on a physical downlink shared channel (PDSCH) transmission parameter;
wherein the PDSCH transmission parameter comprises at least one of the following:
a number of scheduled PDSCH symbols; or
a number of scheduled PDSCH resource blocks (RBs) of downlink subband.

15. The apparatus according to claim 14, wherein the processor is further used for performing the following step:
determining the size of the PRG based on reference information and the PDSCH transmission parameter; wherein the reference information comprises at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

16. The apparatus according to claim 15, wherein the processor is further used for performing the following step:
determining the size of the PRG based on the number of scheduled PDSCH symbols in the PDSCH transmission parameter and the threshold value in the reference information.

17. The apparatus according to claim 15, wherein the processor is further used for performing the following step:
determining the size of the PRG based on the first correspondence between the number of scheduled PDSCH symbols in the PDSCH transmission parameter and the candidate value in the configuration that corresponds to the PRG and is indicated by DCI;
wherein the first correspondence comprises:
in a case that the number of scheduled PDSCH symbols is odd, the size of the PRG is a first candidate value in the configuration that corresponds to the PRG and is indicated by DCI;
in a case that the number of scheduled PDSCH symbols is even, the size of the PRG is a second candidate value in the configuration that corresponds to the PRG and is indicated by DCI.

18. The apparatus according to claim 15, wherein the processor is further used for performing the following steps:
determining a first comparison result and/or a second comparison result based on the number of scheduled PDSCH RBs of downlink subband in the PDSCH transmission parameter and the threshold value in the reference information; and
determining the size of the PRG based on the second correspondence, and the first comparison result and/or the second comparison result.

19. The apparatus according to claim 18, wherein the processor is further used for performing the following step:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

20. The apparatus according to claim 18, wherein the second correspondence comprises at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

21. The apparatus according to claim 18, wherein the second correspondence comprises at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

22. The apparatus according to claim 16, wherein the threshold value is determined by a number of symbols per slot.

23. The apparatus according to any one of claims 18 to 21, wherein the threshold value is determined by a downlink subband size; or,
the threshold value is determined by a bandwidth of a bandwidth part (BWP) where a PDSCH is located, an uplink subband size, and a guard interval size.

24. The apparatus according to claim 23, wherein the downlink subband size is a size of a downlink subband where a PDSCH is located; or,
the downlink subband size is a size of a downlink subband with the largest or smallest number of RBs among two downlink subbands.

25. The apparatus according to claim 23, wherein the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

26. The apparatus according to claim 15, wherein the reference information is configured through radio resource control (RRC) signaling.

27. A method for determining a size of a physical resource group, comprising:
when dynamic physical resource group (PRG) is configured, determining, by a network device, the size of the PRG based on a physical downlink shared channel (PDSCH) transmission parameter;
wherein the PDSCH transmission parameter comprises at least one of the following:
a number of scheduled PDSCH symbols; or
a number of scheduled PDSCH resource blocks (RBs) of downlink subband.

28. The method according to claim 27, further comprising:
determining, by the network device, the size of the PRG based on reference information and the PDSCH transmission parameter; wherein the reference information comprises at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

29. The method according to claim 28, further comprising:
determining, by the network device, the size of the PRG based on the number of scheduled PDSCH symbols in the PDSCH transmission parameter and the threshold value in the reference information.

30. The method according to claim 28, further comprising:
determining, by the network device, the size of the PRG based on the first correspondence between the number of scheduled PDSCH symbols in the PDSCH transmission parameter and the candidate value in the configuration that corresponds to the PRG and is indicated by DCI;
wherein the first correspondence comprises:
in a case that the number of scheduled PDSCH symbols is odd, the size of the PRG is a first candidate value in the configuration that corresponds to the PRG and is indicated by DCI;
in a case that the number of scheduled PDSCH symbols is even, the size of the PRG is a second candidate value in the configuration that corresponds to the PRG and is indicated by DCI.

31. The method according to claim 28, further comprising:
determining, by the network device, a first comparison result and/or a second comparison result based on the number of scheduled PDSCH RBs of downlink subband in the PDSCH transmission parameter and the threshold value in the reference information; and
determining, by the network device, the size of the PRG based on the second correspondence, and the first comparison result and/or the second comparison result.

32. The method according to claim 31, wherein the determining, by the network device, the first comparison result and/or the second comparison result based on the number of scheduled PDSCH RBs of downlink subband in the PDSCH transmission parameter and the threshold value in the reference information comprises:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

33. The method according to claim 31, wherein the second correspondence comprises at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

34. The method according to claim 31, wherein the second correspondence comprises at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

35. An apparatus for determining a size of a physical resource group, comprising: a memory, a transceiver, and a processor;
wherein the memory is used for storing program instructions; the transceiver is used for sending and receiving data under the control of the processor; the processor is used for reading the program instructions from the memory and performing the following step:
when dynamic physical resource group (PRG) is configured, determining the size of the PRG based on a physical downlink shared channel (PDSCH) transmission parameter;
wherein the PDSCH transmission parameter comprises at least one of the following:
a number of scheduled PDSCH symbols; or
a number of scheduled PDSCH resource blocks (RBs) of downlink subband.

36. The apparatus according to claim 35, wherein the processor is further used for performing the following step:
determining the size of the PRG based on reference information and the PDSCH transmission parameter; wherein the reference information comprises at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

37. The apparatus according to claim 36, wherein the processor is further used for performing the following step:
determining the size of the PRG based on the number of scheduled PDSCH symbols in the PDSCH transmission parameter and the threshold value in the reference information.

38. The apparatus according to claim 36, wherein the processor is further used for performing the following step:
determining the size of the PRG based on the first correspondence between the number of scheduled PDSCH symbols in the PDSCH transmission parameter and the candidate value in the configuration that corresponds to the PRG and is indicated by DCI;
wherein the first correspondence comprises:
in a case that the number of scheduled PDSCH symbols is odd, the size of the PRG is a first candidate value in the configuration that corresponds to the PRG and is indicated by DCI;
in a case that the number of scheduled PDSCH symbols is even, the size of the PRG is a second candidate value in the configuration that corresponds to the PRG and is indicated by DCI.

39. The apparatus according to claim 36, wherein the processor is further used for performing the following steps:
determining a first comparison result and/or a second comparison result based on the number of scheduled PDSCH RBs of downlink subband in the PDSCH transmission parameter and the threshold value in the reference information; and
determining the size of the PRG based on the second correspondence, and the first comparison result and/or the second comparison result.

40. The apparatus according to claim 39, wherein the processor is further used for performing the following step:
in a case that PDSCH transmission is in one downlink subband, determining the first comparison result by comparing a number of scheduled PDSCH RBs in the one downlink subband with the threshold value; or
in a case that the PDSCH transmission is in two downlink subbands, determining the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

41. The apparatus according to claim 39, wherein the second correspondence comprises at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

42. The apparatus according to claim 39, wherein the second correspondence comprises at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

43. An apparatus for determining a size of a physical resource group, comprising:
a first processing module, configured to, when dynamic physical resource group (PRG) is configured, determine the size of the PRG based on a physical downlink shared channel (PDSCH) transmission parameter;
wherein the PDSCH transmission parameter comprises at least one of the following:
a number of scheduled PDSCH symbols; or
a number of scheduled PDSCH resource blocks (RBs) of downlink subband.

44. The apparatus according to claim 43, wherein the first processing module is further configured to:
determine the size of the PRG based on reference information and the PDSCH transmission parameter; wherein the reference information comprises at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

45. The apparatus according to claim 44, wherein the first processing module is further configured to:
determine the size of the PRG based on the number of scheduled PDSCH symbols in the PDSCH transmission parameter and the threshold value in the reference information.

46. The apparatus according to claim 44, wherein the first processing module is further configured to:
determine the size of the PRG based on the first correspondence between the number of scheduled PDSCH symbols in the PDSCH transmission parameter and the candidate value in the configuration that corresponds to the PRG and is indicated by DCI;
wherein the first correspondence comprises:
in a case that the number of scheduled PDSCH symbols is odd, the size of the PRG is a first candidate value in the configuration that corresponds to the PRG and is indicated by DCI;
in a case that the number of scheduled PDSCH symbols is even, the size of the PRG is a second candidate value in the configuration that corresponds to the PRG and is indicated by DCI.

47. The apparatus according to claim 44, wherein the first processing module is further configured to:
determine a first comparison result and/or a second comparison result based on the number of scheduled PDSCH RBs of downlink subband in the PDSCH transmission parameter and the threshold value in the reference information; and
determine the size of the PRG based on the second correspondence, and the first comparison result and/or the second comparison result.

48. The apparatus according to claim 47, wherein the first processing module is further configured to:
in a case that PDSCH transmission is in one downlink subband, determine the first comparison result by comparing a number of scheduled PDSCH RBs in the one downlink subband with the threshold value; or
in a case that the PDSCH transmission is in two downlink subbands, determine the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

49. The apparatus according to claim 47, wherein the second correspondence comprises at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

50. The apparatus according to claim 47, wherein the second correspondence comprises at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

51. The apparatus according to claim 45, wherein the threshold value is determined by a number of symbols per slot.

52. The apparatus according to any one of claims 47 to 50, wherein the threshold value is determined by a downlink subband size; or,
the threshold value is determined by a bandwidth of a bandwidth part (BWP) where a PDSCH is located, an uplink subband size, and a guard interval size.

53. The apparatus according to claim 52, wherein the downlink subband size is a size of a downlink subband where a PDSCH is located; or,
the downlink subband size is a size of a downlink subband with the largest or smallest number of RBs among two downlink subbands.

54. The apparatus according to claim 52, wherein the downlink subband size is a number of consecutive RBs for downlink transmission in an active downlink BWP;
the uplink subband size is a number of consecutive RBs for uplink transmission in an active uplink BWP;
the guard interval size is a number of RBs of guard interval in the active uplink or downlink BWP.

55. The apparatus according to claim 44, wherein the reference information is configured through radio resource control (RRC) signaling.

56. An apparatus for determining a size of a physical resource group, comprising:
a second processing module, configured to, when dynamic physical resource group (PRG) is configured, determine the size of the PRG based on a physical downlink shared channel (PDSCH) transmission parameter;
wherein the PDSCH transmission parameter comprises at least one of the following:
a number of scheduled PDSCH symbols; or
a number of scheduled PDSCH resource blocks (RBs) of downlink subband.

57. The apparatus according to claim 56, wherein the second processing module is further configured to:
determine the size of the PRG based on reference information and the PDSCH transmission parameter; wherein the reference information comprises at least one of the following:
a threshold value;
a first correspondence between the number of scheduled PDSCH symbols in the PDSCH transmission parameter and a candidate value in a configuration that corresponds to the PRG and is indicated by downlink control information (DCI); or
a second correspondence between the number of scheduled PDSCH RBs of downlink subband in the PDSCH transmission parameter and a candidate value in the configuration that corresponds to the PRG and is indicated by DCI.

58. The apparatus according to claim 57, wherein the second processing module is further configured to:
determine the size of the PRG based on the number of scheduled PDSCH symbols in the PDSCH transmission parameter and the threshold value in the reference information.

59. The apparatus according to claim 57, wherein the second processing module is further configured to:
determine the size of the PRG based on the first correspondence between the number of scheduled PDSCH symbols in the PDSCH transmission parameter and the candidate value in the configuration that corresponds to the PRG and is indicated by DCI;
wherein the first correspondence comprises:
in a case that the number of scheduled PDSCH symbols is odd, the size of the PRG is a first candidate value in the configuration that corresponds to the PRG and is indicated by DCI;
in a case that the number of scheduled PDSCH symbols is even, the size of the PRG is a second candidate value in the configuration that corresponds to the PRG and is indicated by DCI.

60. The apparatus according to claim 57, wherein the second processing module is further configured to:
determine a first comparison result and/or a second comparison result based on the number of scheduled PDSCH RBs of downlink subband in the PDSCH transmission parameter and the threshold value in the reference information; and
determine the size of the PRG based on the second correspondence, and the first comparison result and/or the second comparison result.

61. The apparatus according to claim 60, wherein the second processing module is further configured to:
in a case that PDSCH transmission is in one downlink subband, determine the first comparison result by comparing a number of scheduled PDSCH RBs in the one downlink subband with the threshold value; or
in a case that the PDSCH transmission is in two downlink subbands, determine the second comparison result by comparing a total number of scheduled PDSCH RBs in the two downlink subbands with the threshold value, or by comparing numbers of scheduled PDSCH RBs in the two downlink subbands respectively with the threshold value, or by comparing a number of scheduled PDSCH RBs in a target downlink subband of the two downlink subbands with the threshold value;
wherein the target downlink subband is a downlink subband with the smallest or largest number of scheduled PDSCH RBs among the two downlink subbands.

62. The apparatus according to claim 60, wherein the second correspondence comprises at least one of the following:
in a case that the first comparison result is that a number of scheduled PDSCH RBs in one downlink subband is greater than the threshold value, the size of the PRG is a first candidate value in the configuration that corresponds to the PRG and is indicated by DCI;
in a case that the first comparison result is that the number of scheduled PDSCH RBs in the one downlink subband is less than or equal to the threshold value, the size of the PRG is a second candidate value in the configuration that corresponds to the PRG and is indicated by DCI;
in a case that the second comparison result is that a total number of scheduled PDSCH RBs in two downlink subbands is greater than the threshold value, the size of the PRG in each of the two downlink subbands is the first candidate value in the configuration that corresponds to the PRG and is indicated by DCI;
in a case that the second comparison result is that the total number of scheduled PDSCH RBs in the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in one of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in each downlink subband of the two downlink subbands is less than or equal to the threshold value, the size of the PRG in each of the two downlink subbands is the second candidate value in the configuration that corresponds to the PRG and is indicated by DCI;
in a case that the second comparison result is that the number of scheduled PDSCH RBs in each downlink subband of the two downlink subbands is greater than the threshold value, the size of the PRG in each of the two downlink subbands is the first candidate value in the configuration that corresponds to the PRG and is indicated by DCI;
in a case that the second comparison result is that a number of scheduled PDSCH RBs in one of the two downlink subbands is less than or equal to the threshold value, the size of the PRG in each of the two downlink subbands is the second candidate value in the configuration that corresponds to the PRG and is indicated by DCI;
in a case that the second comparison result is that a number of scheduled PDSCH RBs in a target downlink subband is greater than the threshold value, the size of the PRG in each of the two downlink subbands is the first candidate value in the configuration that corresponds to the PRG and is indicated by DCI; or
in a case that the second comparison result is that the number of scheduled PDSCH RBs in the target downlink subband is less than or equal to the threshold value, the size of the PRG in each of the two downlink subbands is the second candidate value in the configuration that corresponds to the PRG and is indicated by DCI.

63. The apparatus according to claim 60, wherein the second correspondence comprises at least one of the following:
in a case that the second comparison result is that a number of scheduled PDSCH RBs in a first downlink subband is greater than the threshold value, the size of the PRG in the first downlink subband is a first candidate value in the configuration that corresponds to the PRG and is indicated by DCI; or in a case that the second comparison result is that a number of scheduled PDSCH RBs in a second downlink subband is less than or equal to the threshold value, the size of the PRG in the second downlink subband is the second candidate value in the configuration that corresponds to the PRG and is indicated by DCI.

64. A processor-readable storage medium storing a computer program, wherein the computer program is used for causing a processor to perform the method according to any one of claims 1 to 13, or to perform the method according to any one of claims 27 to 34.
